# EUROPÄISCHE PATENTSCHRIFT

(11) **EP 0 738 661 B1**
(45) Veröffentlichungstag und Bekanntmachung des Hinweises auf die Patenterteilung: **15.12.1999**
(21) Anmeldenummer: 96104734.7
(22) Anmeldetag: 25.03.1996
(51) Int. Cl.: B65D 19/24

(54) **Verfahren und Vorrichtung zur Herstellung einer Palette aus Kunststoff**
Process and device for manufacturing of a pallet made of plastic material
Procèdè et dispositif pour la fabrication d'une pallette en matière plastique

(30) Priorität: 24.03.1995 DE 19510873
(43) Veröffentlichungstag der Anmeldung: 23.10.1996
(73) Patentinhaber: REMAPLAN ANLAGENBAU GMBH, D-81737 München (DE)
(72) Erfinder: Rüttnauer, Rochus C., 81739 München (DE)
(74) Vertreter: Patentanwälte Dr. Solf & Zapf

(56) Entgegenhaltungen:
- WO-A-94/10051
- DE-A- 2 100 763
- DE-A- 2 136 644
- DE-A- 2 149 271
- FR-A- 2 180 516
- FR-A- 2 259 023

## Beschreibung

Die Erfindung betrifft ein Verfahren zur Herstellung einer beispielsweise viereckigen Palette, insbesondere einer Spiegelbildpalette aus Kunststoff bestehend aus einem im wesentlichen flachen, quaderförmigen Körper, der zwei plattenförmige Tragdecks mit je einer Deckfläche, z.B. zwei spiegelbildlich strukturierte und spiegelbildlich zueinander angeordneten Deckflächen und neun mit den beiden Decks in Verbindung stehenden Säulen aufweist, wobei die Säulen eckseitig, randseitig mittig und zentralmittig zwischen den Deckflächen angeordnet und zwischen den Säulen doppelkreuzartig angeordnete Passagen vorhanden sind und eine Vorrichtung zum Durchführen des Verfahrens.

Es sind Spiegelbildpaletten (Mirror-Image-Paletten) bekannt, deren beidseitige Deckflächen jeweils den oberflächigen Teil von relativ dünnen Deckplatten darstellt, die vorzugsweise mit neun quermittig verschweißten Säulen in Verbindung stehen. Die beiden Palettenhälften, die jeweils aus der Deckplatte und den neun halbdistanzierten, angeformten Säulen bestehen, sind vorzugsweise spiegelbildlich ausgebildet, so daß auch die Deckflächen gleichartig strukturiert sind.

Die äußeren Deckflächen sind abgeflacht und weisen nach außen sichtbare Durchgangsöffnungen bzw. Löcher auf. Die inneren Deckflächen weisen erhabene Strukturen, insbesondere Verrippungen auf, deren parzellenartige Segmente diese von außen sichtbaren Duchgangsöffnungen besitzen.

Die Plattenhälften können mit Hilfe der bekannten Spritz-Preß-Technik hergestellt werden, wobei das eingesetzte Spritz-Preß-Werkzeug aus zwei Formenhälften, einer feststehenden Angußformhälfte und einer bewegbaren Auswerferformhälfte besteht, die vorzugsweise horizontal zusammenführbar sind. Die Angußformhälfte besitzt umfassende Seitenleisten, in die innenwandig die Auswerferformhälfte formschlüssig einführbar ist. Vor dem Pressen wird in den zwischen beiden Formhälften vorhandenen Spritzhohlraum durch einen Injektor der Werkstoff, insbesondere flüssiger Kunststoff, eingespritzt.

Nach dem Verfestigen wird die zum Verschweißen vorgesehen Palettenhälfte aus der Auswerferformhälfte ausgeworfen. Um eine verwendungsfähige Palette, z.B. Spiegelbildpalette, zu erhalten, werden die beiden Palettenhälften, z.B. die spiegelbildlich identischen Palettenhälften, mittels einer Schweißmaschine zusammengeschweißt.

Die Herstellung von zwei Palettenhälften und deren nachfolgendes Zusammenschweißen, um z.B. eine Spiegelbildpalette zu erhalten, sind mit erheblichem Aufwand verbunden. Außerdem stellen die Schweißnähte bzw. -flächen ausgewiesene Schwachstellen dar; die meisten der Belastungsrisse treten an diesen Stellen auf.

Weiterhin sind Paletten bekannt, die aus einem baulich einteiligen bzw. einstückig einheitlich hergestellten, vorzugsweise verrippten Körper bestehen, der ein zu beiden Deckflächen hin gerichtetes offenes Verrippungsgitter besitzt, das aus innen befindlichen, im wesentlichen horizontalen und aus nach außen gerichteten, im wesentlichen vertikalen Verrippungswandungen besteht.

Das Verrippungsgitter weist parzellenartige Segmente auf, die vorzugsweise jeweils auf der gesamten Deckfläche vorhanden sind. Die die im Querschnitt viereckigen, vorzugsweise rechteckigen Passagen im wesentlichen horizontal begrenzenden Segmente sind nach oben oder unten einseitig verrippt. Die angrenzenden sowie nicht angrenzenden Segmente der Säulen sind vorzugsweise doppelseitig nach oben und unten verrippt.

In den innen befindlichen, im wesentlichen horizontalen Verrippungswandungen, d.h., in den Böden der parzellenartigen Segmente ist jeweils mindestens eine Durchgangsöffnung, vorzugsweise jeweils ein Ablußloch eingeformt.

Die parzellenartigen Verrippungssegmente können insbesondere als verrippte Viertel eines jeweils zu den Mittellinien symmetrisch angelegten Verrippungsgrundrisses ausgebildet sein, d.h., das Verrippungsgitter ist zu seinen senkrecht zueinander befindlichen Mittellinien symmetrisch ausgeführt.

Die zwischen den Säulen vorhandenen, sich doppelkreuzend ausgebildeten Passagen weisen Einfahröffnungen auf, die an den Außenseiten vorzugsweise angeschrägt sind. Damit sind die deckenseitigen und säulenseitigen Verrippungen im Bereich der Einfahröffnungen ebenfalls angeschrägt.

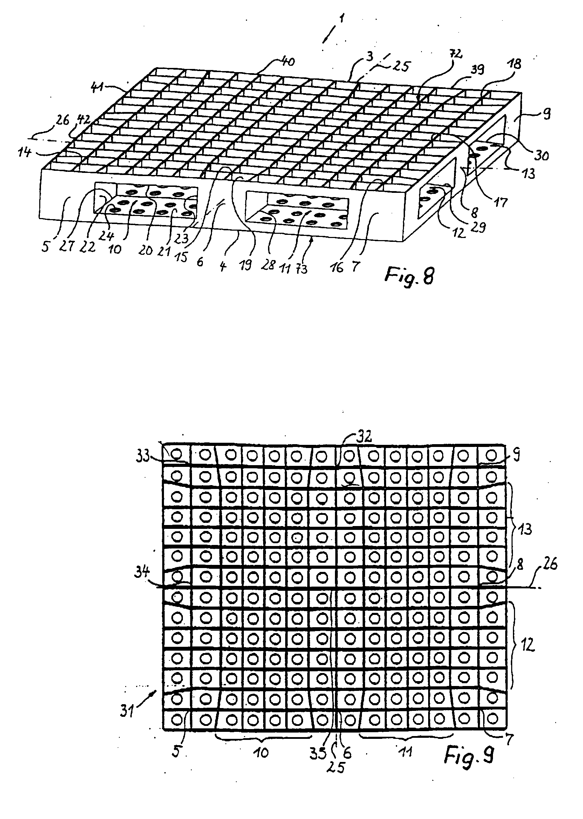

In Fig. 8 ist eine solche Spiegelbildpalette perspektivisch dargestellt. Die Spiegelbildpalette dient zur Lagerung und zum Transport von vorzugsweise stapelbaren Gütern. Sie besteht aus einem im wesentlichen flachen, quaderförmigen Körper 1, der zwei Tragdecks mit jeweils spiegelbildlich strukturierter Deckfläche 3, 4 und neun mit den Decks in Verbindung stehenden rechteckigen Säulen aufweist. Von den neun Säulen sind die fünf Säulen 5, 6, 7, 8, 9 in der perspektivischen Darstellung sichtbar. Die Säulen 5 bis 9 und die restlichen vier Säulen sind eckseitig, randseitig mittig und zentral mittig zwischen den Deckflächen 3, 4 angeordnet. Zwischen den neun Säulen sind doppelkreuzartig verlaufende Passagen 10, 11 12, 13, vorhanden.

Die Spiegelbildpalette stellt einen einheitlichen verrippten Körper dar, in den die Decks mit den Deckflächen 3, 4 und die neun Säulen derart integriert sind, daß beide nach außen gerichtete Verrippungen aufweisen. Diese Verrippungen stellen jeweils ein zu beiden Deckflächen 3 und 4 hin gerichtetes, offenes Verrippungsgiter 72 und 73 dar, das vorzugsweise aus horizontalen und vertikalen Verrippungswandungen 20, 21 sowie 22, 23 besteht.

Die oberen Verrippungsflächen, z.B 14, 15, 16, 17, 18 der Säulen 5 bis 9 z.B. sind Teil der verrippten oberen Deckfläche 3.

Vier Verrippungen und ein Boden bilden in parzellenartiges Segment 19, das in weitgehend gleicher Form in einer Vielzahl jeweils auf beiden Deckflächen 3, 4 vorhanden ist. Zu beiden Seiten der Spiegelbildpalette 1 sind 14 x 14 x 2 Segmente vorhanden. Ein parzellenartiges Segment stellt das Grundelement der Verrippungsgitterseiten 72 und 73 dar. Die Passagen 10 bis 13 sind von horizontalen und vertikalen Verrippungswandungen begrenzt, wobei die Passage 10 stellvertretend auch für die anderen mit Bezugszeichen 20, 21 sowie 22, 23 versehen ist. In den horizontalen Verrippungswandungen 20, 21, insbesondere in den jeweiligen miteinander fluchtenden Böden der parzellenartigen Segmente, sind mindestens eine Durchgangsöffnung, vorzugsweise jeweils ein Abflußloch 24 eingeformt.

In Fig. 9 ist in einer Draufsicht ein Verrippungsgrundriß dargestellt. Ein parzellenartiges Verrippungssegment 19 stellt ein verripptes Viertel des jeweils zu den Mittellinien 25, 26 symmetrisch angelegten Verrippungsgrundrisses 31 dar. Gegenüber Fig. 8 ist die Lage der restlichen Säulen 32, 33, 34, 35 ausgezeichnet.

Aus Fig. 9 ist ersichtlich, daß die zwischen den Säulen 5 bis 9 und 32 bis 35 ausgebildeten Passagen 10 bis 13 Einfahröffnungen 27, 28, 29, 30 aufweisen, die an ihren Außenseiten angeschrägt sind.

Zur Herstellung einer solchen einteiligen Spiegelbildpalette 1 ist beispielsweise aus der DE-OS-2 136 644 ein Spritz-Guß-Werkzeug bekannt, welches aus zwei Formhälften besteht und zur Herstellung der Passagen 10 11, 12 und 13 von außen in das Werkzeug einschiebbare Schieber rechteckigen Querschnitts vorsieht, wobei eine erste Schiebergruppe das Formwerkzeug über die gesamte Breite der herzustellenden Palette durchdringt und eine zweite Schiebergruppe, welche die Passagen rechtwinklig zur ersten Schiebergruppe ausbilden soll und mit Stirnseiten der Schieber der zweiten Schiebergruppe an den durchgehenden Längskanten der Schieber der ersten Schiebergruppe anliegen. Zur vollständigen Ausgestaltung der Passagen einer einteiligen Spiegelbildpalette bedient sich das in diesem Stand der Technik vorgeschlagene Spritz-Guß-Werkzeug zusätzlicher loser Formkerne, die den Zwischenraum zwischen den Schiebern der ersten Schiebergruppe der für die Schieber der zweiten Schiebergruppe nicht erreichbar ist, ausfüllen.

Nachteilig bei einer solchen Werkzeugausgestaltung ist, daß die losen Formkerne aus Entformungsgründen mit relativ hohen Maßtoleranzen zu versehen sind. Deshalb kann es im zusammengefahrenen Zustand des Spritzgußwerkzeuges bei eingefahrenen Schiebern zu Spalten zwischen den Formkernen und den Schiebern der ersten Schiebergruppe kommen, was zur Folge haben kann, daß beim Befüllen der Form diese Spalten mit Kunststoff ausgefüllt werden und so an der fertigen Palette ungewollte Trennwände entstehen können, welche die Passagen zumindest teilweise verschließen können. Zur Beseitigung derartiger Trennwände kann es notwendig sein, Nacharbeiten durchführen zu müssen, welche einerseits kostenintensiv sind und andererseits für den Bearbeiter umständlich durchzuführen sind, da diese Trennwände an unzugänglichen Stellen in den mittleren Bereichen der Passagen auftreten. Weiterhin ist es bei einer derartigen Werkzeugausgestaltung nachteilig, daß bei längerem Gebrauch bzw. bei Abnutzung des Werkzeuges eventuell Kollisionen der einzuschiebenden Schieber der ersten Gruppe mit den losen Formkernen auftreten können und somit eine Beschädigung des Spritz-Guß-Werkzeuges erfolgen kann.

Der Erfindung liegt die Aufgabe zugrunde, ein Verfahren zur Erzeugung einer Palette, vorzugsweise einer einteiligen Spiegelbildpalette anzugeben, welches eine schnellere, einfachere und kostengünstigere Herstellung einer solchen Palette erlaubt, sowie ein Spritz-Preß-Werkzeug zur Durchführung des Verfahrens in geeigneter baulicher Ausführung zu schaffen.

Die Herstellung einer solchen Spiegelbildpalette aus recyceltem Kunststoff erfolgt üblicherweise mittels der Spritz-Preß-Technik. Zur Herstellung einer solchen Spiegelbildpalette besteht das erfindungsgemäße Werkzeug aus einer feststehenden Angußformhälfte und aus einer bewegbaren Auswerferformhälfte, die aus einer Grundplatte und mindestens einem Auswerferorgan besteht.

An der Grundplatte können umfassende Seitenleisten befestigt sein, in denen acht Schieber enthalten sind, die miteinander zusammengesteckt ein Doppelkreuz bilden, das den vorgesehenen, sich doppelkreuzenden Passagen zwischen den Säulen in der Spiegelbildpalette entspricht, wobei nach dem Verformen die acht Schieber aus den Seitenleisten herausbewegbar sind.

Da die Palette und insbesondere die Spiegelbildpalette im allgemeinen ein flacher quaderförmiger Körper ist, sind symmetrieentsprechend jeweils zwei Schieber von den acht Schiebern gleich lang ausgebildet. Vorzugsweise besitzen die Schieber in der doppelkreuzartigen Anlage gleiches rechteckiges Querschnittsprofil.

Die Auswerferformhälfte und die Angußformhälfte besitzen in ihren Randbereichen Hinterschnitte, die den Maßen der Verrippungen, der Verrippungshöhe und den Maßen des Verrippungsgrundrisses entsprechen.

In der Auswerferformhälfte des Werkzeuges sind Zapfenhülsen mit gefederten Formzapfen eingebracht, die zur Formung der Abflußlöcher während der Verpressung des eingespritzten recycelten Kunststoffes vorgesehen sind.

Die Erfindung eröffnet die Möglichkeit, durch das erfindungsgemäße Spritz-Preß-Werkzeug eine erfindungsgemäße einteilige Palette, insbesondere eine Spiegelpalette, aus einem einteiligen Körper bestehend, mit weniger Zeit- und Kostenaufwand herzustellen. Mit der ganzheitlichen Herstellung der Spiegelbildpalette ist es auch möglich, sie aus recyceltem Kunststoff herzustellen, ohne daß Verschweißungen mit gleichem oder anderem Kunststoff, der dazu noch verträglich sein müßte, erforderlich sind.

Weiterbildungen und vorteilhafte Ausgestaltungen der Erfindung sind in weiteren Unteransprüchen angegeben.

Das erfindungsgemäße Spritz-Preß-Werkzeug für eine einteilige Spiegelbildpalette wird anhand eines Ausführungsbeispieles mit den Fign. 1-7 näher erläutert.

Es zeigen:
- Fig. 1: eine schematische Darstellung des erfindungsgemäßen Spritz-Preß-Werkzeuges,
- Fig. 2: eine schematische Darstellung der Anordnung der acht Schieber in den Seitenleisten des erfindungsgemäßen Spritz-Preß-Werkzeuges in einer Ansicht von unten auf die Unterseite der Auswerferformhälfte gemäß Richtungspfeil D in Fig. 1.
- Fig. 3: eine schematische Schnittdarstellung des Spritz-Preß-Werkzeuges längs der Linie E-E in Fig. 2,
- Fig. 4: eine schematische Schnittdarstellung des Spritz-Preß-Werkzeuges längs der Linie F-F in Fig. 2,
- Fig. 5: eine schematische Schnittdarstellung einer federunterstützten Zapfenhülse in einer Auswerferformhälfte in Offenstellung zur Angußformhälfte,
- Fig. 6: eine schematische Schnittdarstellung einer federunterstützten Zapfenhülse in einer Auswerferformhälfte in Einspritzstellung,
- Fig. 7: eine schematische Schnittdarstellung einer federunterstützten Zapfenhülse in der Auswerferformhälfte zur Formung eines Abflußloches in einen parzellenartigen Segmentboden in Preßstellung zur Angußformhälfte.
- Fig. 8: eine perspektivische Darstellung einer einteiligen Spiegelbildpalette,
- Fig. 9: eine Draufsicht auf den Verrippungsgrundriß einer Spiegelbildpalette nach Fig. 8,

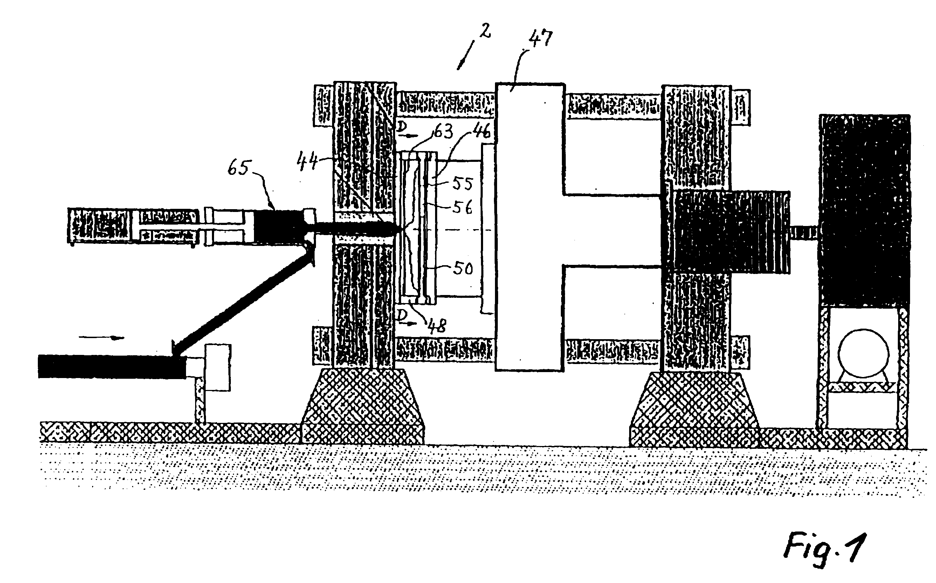

In Fig. 1 ist ein erfindungsgemäßes Spritz-Preß-Werkzeug 2 zur Herstellung einer Spiegelbildpalette 1 gemäß Fig. 8 mit einer feststehenden Angußformhälfte 44 und einer bewegbaren Auswerferformhälfte 45 dargestellt, wobei die Auswerferformhälfte 45 eine Grundplatte 46 und ein Auswerferorgan 47 aufweist. Das erfindungsgemäße Spritz-Preß-Werkzeug ist in die bekannte Spritz-Preß-Technikanlage einbeziehbar.

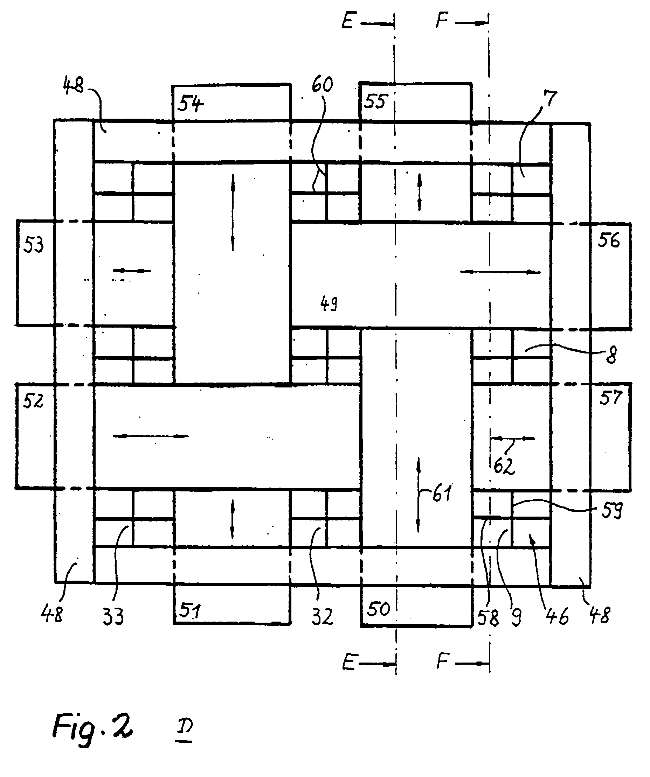

Erfindungsgemäß sind im Bereich der Seitenkanten der rechteckigen Grundplatte 46 angußformhälftenseitig auf der Grundplatte 46 Seitenleisten 48 angeformt, die sich zu einem Rahmen ergänzen und einen wannenförmigen bzw. im Querschnitt U-förmigen Innenraum bilden. In jeder Leiste 48 sind in entsprechenden Durchgängen auf Abstand voneinander zwei Schieber eingepaßt, wobei die Längen der Schieber 50 bis 57 derart aufeinander abgestimmt sind, daß sie im Innenraum des Rahmens miteinander ein Doppelkreuz 49 bilden (Fig. 2). Die Schieber 50 bis 57 sind senkrecht zur Längserstreckung der dazugehörigen Leiste 48 bewegbar angeordnet, wobei grundsätzlich sich im Innenraum des Rahmens gegenüberliegend angeordnete Schieber (z.B. 50, 55) gegen einen im Innenraum des Rahmens querverlaufenden Schieber, z.B. Schieber 56 stoßen und von letzterem auf Abstand gehalten werden. Desgleichen stoßen im Uhrzeigersinn weiterfolgend betrachtet die sich gegenüberliegend angeordneten Schieber 51, 54 gegen die querverlaufenden Schieber 52, die Schieber 52, 57 gegen den Schieber 50, die Schieber 53, 56 gegen den Schieber 54. Dabei ist im Uhrzeigersinn jeweils benachbart einem längeren Schieber, z.B. dem Schieber 50, ein kürzerer Schieber 51, benachbart angeordnet, so daß jeweils einem längeren Schieber 50, 52, 54, 56 ein kürzerer Schieber 51, 53, 55, 57 folgt. Die Schieber bilden im zusammengeschobenen Zustand das Doppelkreuz 49, wobei zwischen den Kreuz- bzw. Schieberlücken und den Lücken zwischen den Rahmenleisten 48 und den Schiebern die Räume für die Formung der Palettensäulen gebildet werden und die Schieber die Passagenräume der Spiegelbildpalette beim Formen der Palette materialfrei halten.

Dieses Doppelkreuz 49 aus den acht Schiebern 50 und 57 ist, wie in Fig. 2 gezeigt, in eine Ansicht in Pfeilrichtung D in Fig. 1 dargestellt. Dabei sind die Schieber 50 bis 57 in angepaßte, im Querschnitt rechteckige Öffnungen der mit der Grundplatte 46 in Verbindung stehenden Seitenleisten 48 einschiebbar und sind dort gehaltert.

Die Pfeilrichtungen, z. B. 61, 62 (in Fig. 2) auf den Schiebern 50 bzw. 57 zeigen die möglichen Bewegungsrichtungen der Schieber 50 bzw. 57 vor und nach dem Spritz-Pressen einer Palette 1 an. Die anderen Schieber 51 bis 56 sind ebenso in gleicher Weise bewegbar.

In der Grundplatte 46 ist ein aus Einschniten bzw. Hinterschnitten 58 bzw. 59 bestehendes Gitter bzw. Hinterschnittgitter 60 vorhanden, das weitgehend dem Verrippungsgrundriß 31 entspricht.

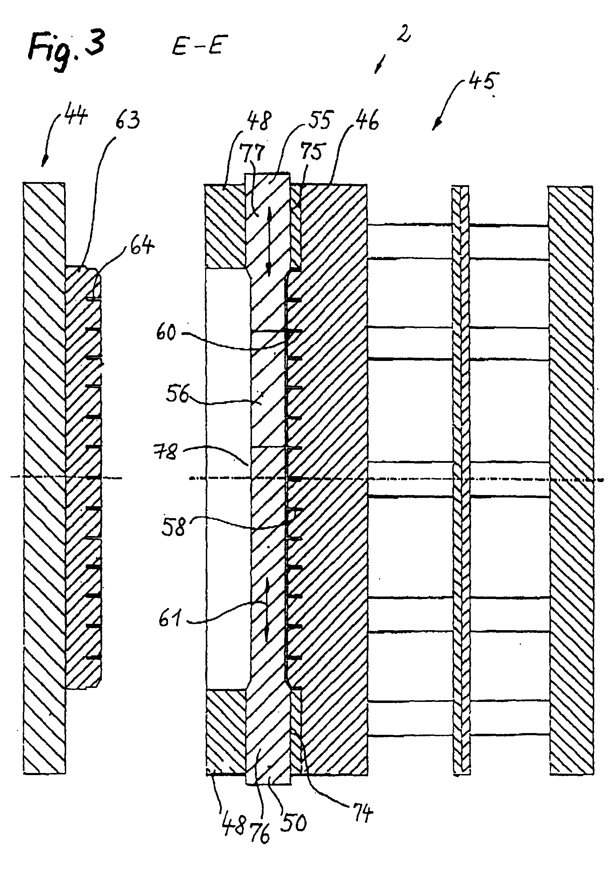

In Fig. 3 ist in einer Schnittdarstellung das erfindungsgemäße Spritz-Preß-Werkzeug 2 mit der Auswerferformhälfte 45 längs der Linie E-E in Fig. 2 dargestellt, wobei in die Schnittdarstellung die der Auswerferformhälfte gegenüberliegend angeordnete Angußformhälfte 44 einbezogen ist. Die Schnittdarstellung erfolgt dabei derart, daß sich im Bereich der zur Bewegung der Schieber 55 bzw. 50 senkrecht gerichteten Hinterschnitte 58 befindet. Sowohl die Grundplatte 46 als auch der in die Anordnung der Seitenleisten 48 einführbares Formteil 63 der Angußformhälfte 44 besitzen ein eingeschnittenes Gitter 60 bzw. 64, die sich beide spiegelbildlich entsprechen.

Die angepaßten Öffnungen 74, 75 entsprechen maßgerecht jeweils dem Paßteil 76, 77 der Schieber 50 bzw. 55, die in die Öffnungen 74, 75 eingepaßt den jeweils genannten Schieber 50 bzw. 55 in der Seitenleiste 48 arretiert und zum Einspritz- und Preßraum 78 zwischen den beiden Formhälften 44, 45 abdichtet. Für die anderen Schieber 51 bis 56 ist dies gleichermaßen existent.

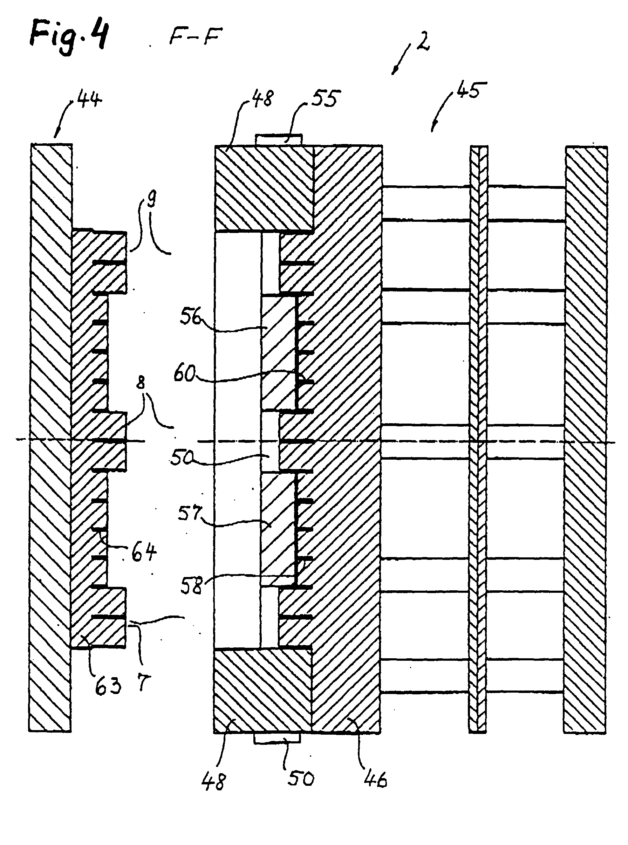

In Fig. 4 ist eine weitere Schnittdarstellung des erfindungsgemäßen Spritz-Preß-Werkzeuges 2 mit der Auswerferformfläche 45 längs der Linie F-F in Fig. 2 dargestellt, aus der die Form der beiden spiegelbildlichen Hinterschnittgitter 60 und 64 auch in einem der Bereiche der Säulen 7, 8, 9 hervorgeht.

In die Schnittdarstellung ist ebenfalls wie in Fig. 3 die Angußformhälfte 44 mit einbezogen.

Die beiden Schnittdarstellungen in Fig. 3 und 4 sind vor der Zusammenführung der beiden Formhälften 44 und 45 in der Offenstellung gezeigt. Die Angußformhälfte 44 und die Auswerferformhälfte 45 sind bei Betätigung der Auswerferformhälfte 45 soweit zusammenführbar, bis die Anordnung der Seitenleisten 48 die Angußformhälfte 44 abdichtet verschließt.

Die Schieber 56 und 57 sind senkrecht zu den Schiebern 50 und 55 in die angepaßten (nicht eingezeichneten) Öffnungen der Seitenleisten 48 eingeschoben.

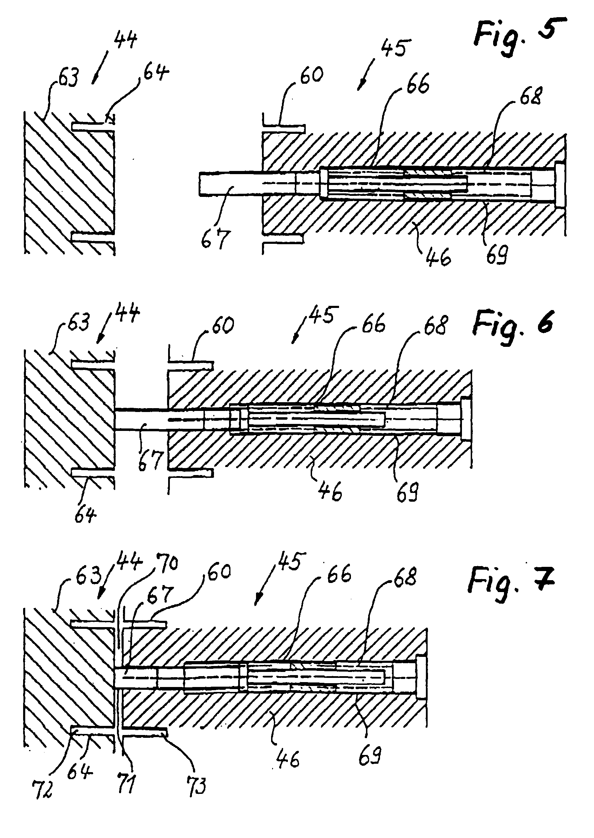

In den Fig. 5 bis 7 ist eine zur Formung eines in einem parzellenartigen Segment vorgesehenen Abflußloches vorgesehene Zapfenhülse 66, die in der Auswerferformhälfte 45 angeordnet ist, in verschiedenen Positionen dargestellt. Die Zapfenhülse 66 besteht aus einem Formzapfen 67, der von einer Feder 68 in einer in die Auswerferformhälfte 45 eingebrachten, befestigten Hülse 69 beaufschlagbar ist.

Während in Fig. 5 der gefederte Formzapfen 67 in der Position dargestellt ist, in der die Angußformhälfte 44 und die Auswerferformhälfte 45 bei offenem Werkzeug 2 getrennt voneinander angeordnet sind, schlägt in der Einspritzstellung in Fig. 6 der Formzapfen 67 an der Angußformhälfte 44 an.

Nach Erreichen einer dichten Verbindung zwischen den Außenbereichen der beiden Formhälften 44, 45 an den Seitenleisten 48 erfolgt von seiten der Angußformhälfte 44 durch den mit ihr verbundenen Injektor 65 (gezeigt in Fig. 1) ein Einspritzen des flüssigen Kunststoffes, der später verpreßt wird.

In Fig. 7 befindet sich das Spritz-Preß-Werkzeug 2 in Preßstellung, d.h. der flüssige Kunststoff ist in die Hinterschnittgitter 60 bzw. 64 gepreßt. Die Angußformhälfte 44 und die Auswerferformhälfte 45 sind in ihre Preßendstellung um die vorgesehene Breite der horizontalen Verrippungswandung 70 des Verrippungsgitters beabstandet. Der flüssige Kunststoff umgibt den Formzapfen 67 und nach der Verfestigung des Kunststoffes bleibt ein Abflußloch 71 zurück.

Da im gleichen Spritz-Preß-Formprozeß Abflußlöcher in beiden begrenzende, im wesentlichen horizontalen Verrippungswandungen der Passage 10 bis 13 vorgesehen sind, enthalten vorzugsweise sowohl die Angußformhälfte 44 als auch die Auswerferformhälfte 45 für jedes der vorgesehenen Abflußlöcher einen solchen gefederten Formzapfen 67.

Die Siegelbildpalette 1 wird durch ihre spiegelbildlichen Hinterschnittgitter 60 und 64 als solche mittels vorzugsweise recyceltem Kunststoff hergestellt. An der spiegelbildlichen Ausführung ändert sich nicht, wenn eine der innen befindlichen, im wesentlichen horizontalen Verrippungsflächen 20, 21 in den Passagen hin zu einer der Deckflächen 3, 4 prozeßbedingt bzw. kunststoffbedingt konstruktiv verschoben werden muß. Das bedeutet nur, daß die Höhen der Hinterschnittgitter 60 und 64 in beiden Formhälften 44 und 45 unterschiedlich ausgeführt sein können.

Im Rahmen der Erfindung liegt es, daß die zum Verrippungsgitter gehörenden Hinterschnittgitter unteschiedliche parzellenartige Segmente je Deck aufweisen können, die sich in Höhe, Breite, Tiefe und Form voneinander unterscheiden.

Ebenso können die Werkzeughälften 44 oder 45 so ausgebildet sein, daß in einer der beiden Deckflächen 3 oder 4 zwischen den Einfahröffnungen 27 bis 30, 39 bis 42 der Passagen 10, 11, 12, 13 Freiräume ohne Verrippungsgitter bzw. ohne horizontale und vertikale Verrippungswandungen entstehen, so daß die Paletten in Form von Fensterkreuzpaletten ausgebildet werden.

Mit dem erfindungsgemäßen Spritz-Preß-Werkzeug sind sowohl die Paletten mit unterschiedlich strukturiertem Verrippungsgitter, d.h. mit zwei unterschiedlichen Hinterschnittgittern an beiden Deckflächen 3, 4 als auch die Fensterkreuzpaletten mit Verrippungsfreiräumen zu einer den Deckflächen 3 oder 4 herstellbar.Es ist außerdem auch möglich, Decks ebenflächig ohne Verrippung herzustellen.

Es liegt weiterhin im Rahmen der Erfindung, daß vorzugsweise das erfindungsgemäße Spritz-Preß-Werkzeug 2 durch die Verwendung der doppelkreuzenden Schieber in einer seiner Formhälften 44 oder 45 für jegliche einteilige Palettenherstellung verwendbar ist, da mit den Schiebern und deren Anordnung die ebenflächigen Passagen erzeugt werden können, unabhängig davon, wie die Decks ausgestaltet werden.

## Patentansprüche

1. Verfahren zur Herstellung einer einteiligen, zwei Decks und zwischen den Decks Säulen sowie zwischen den Säulen Passagen aufweisenden Doppelkreuzpalette aus Kunststoff, insbesondere einer Spiegelbildpalette nach der Spritz-Preß-Technik in einem Spritz-Preß-Werkzeug, wobei mit rechtwinklig aufeinanderstoßenden, unterschiedlich langen, im Zwischenraum zwischen einer Angußformhälfte und einer Auswerferformhälfte des Spritz-Preß-Werkzeugs senkrecht zur Bewegungsrichtung der beiden Formhälften vor- und zurückverfahrbaren Schiebern Doppelkreuzpassagen gebildet werden,
**dadurch gekennzeichnet,**
daß eine Schieberkonstellation verwendet wird, bei der jeweils benachbart einem längeren Schieber ein kürzerer Schieber angeordnet ist.

2. Verfahren nach Anspruch 1,
dadurch gekennzeichnet, daß eine Schieberkonstellation verwendet wird, bei der die jeweils übernächsten Schieber gleich lang sind.

3. Spritz-Preß-Werkzeug (2) für eine Spritz-Preß-Technik-Anlage zur Durchführung des Verfahrens nach Anspruch 1 mit einer feststehenden Angußformhälfte (44) und einer bewegbaren Auswerferformhälfte (45), wobei die Auswerferformhälfte (45) eine Grundplatte und ein Auswerferorgan (47) aufweist und wobei an der Angußformhälfte (44) oder an der Auswerferformhälfte (45) eine Schieberkonstellation angeordnet ist, bei der jeweils benachbart zu einem längeren Schieber (50, 52, 54, 56) ein kürzerer Schieber (51, 53, 55, 57) angeordnet ist.

4. Spritz-Preß-Werkzeug nach Anspruch 3,
dadurch gekennzeichnet, daß je ein Schieber (50, 52, 54, 56) jeweils rechtwinklig zu einem benachbarten Schieber (51, 53, 55, 57) angeordnet ist.

5. Spritz-Preß-Werkzeug nach einem oder mehreren der Ansprüche 3 bis 4, dadurch gekennzeichnet, daß die Auswerferformhälfte (45) eine rechteckige Grundplatte (46) aufweist, an der angußformhälftenseitig Seitenleisten (48) angeordnet sind, die sich zu einem Rahmen ergänzen und einen wannenförmigen, im Querschnitt U-förmigen Innenraum bilden, wobei in jeder Leiste (48) in entsprechenden Durchgängen auf Abstand voneinander zwei unterschiedlich lange Schieber eingepaßt sind, wobei die Längen der Schieber (50-57) derart aufeinander abgestimmt sind, daß sie im Inneraum des Rahmens miteinander ein Doppelkreuz (49) bilden.

6. Spritz-Preß-Werkzeug nach Anspruch 5, dadurch gekennzeichnet, daß die Schieber (50-57) senkrecht zur Längserstreckung der jeweiligen Leiste (48) bewegbar angeordnet sind, wobei sich im Innenraum des Rahmens gegenüberliegend angeordnete Schieber gegen einen im Innenraum des Rahmens quer verlaufenden Schieber stoßen.

7. Spritz-Preß-Werkzeug nach einem oder mehreren der Ansprüche 3 bis 6, dadurch gekennzeichnet, daß in der Grundplatte (46) ein aus Einschnitten bzw. Hinterschnitten (58 bzw. 59) bestehendes Gitter bzw. Hinterschnittgitter (60) vorgesehen ist.

8. Spritz-Preß-Werkzeug nach Anspruch 7,
dadurch gekennzeichnet, daß in der Angußformhälfte (44) ebenfalls ein eingeschnittenes Gitter (64) vorgesehen ist.

9. Spritz-Preß-Werkzeug nach einem oder mehreren der Ansprüche 3 bis 8, dadurch gekennzeichnet, daß die Schieber (50-57) mit Betätigungsorganen, insbesondere hydraulischen, pneumatischen oder elektromagnetisch gesteuerten Organen, vorzugsweise hydraulisch betriebenen Bewegungszylindern betätigbar angeordnet sind, so daß sie nach dem Verfestigen des eingespritzten Kunststoffs aus dem von den Seitenleisten (48) begrenzten Innenraum herausbewegbar sind.

10. Spritz-Preß-Werkzeug nach einem oder mehreren der Ansprüche 5 bis 9, dadurch gekennzeichnet, daß die in die Öffnungen der Seitenleisten (48) einschiebbaren Schieber (50-57) ein rechteckiges Querschnittsprofil aufweisen.

11. Spritz-Preß-Werkzeug nach Anspruch 10,
dadurch gekennzeichnet, daß die Schieber (50-57) ein gleiches, rechteckiges Profil aufweisen.

12. Spritz-Preß-Werkzeug nach einem oder mehreren der Ansprüche 3 bis 11, dadurch gekennzeichnet, daß in mindestens eine der beiden Formhälften (44, 45) Zapfenhülsen (66) mit federgestützen Formzapfen (67) eingebracht sind, die zur Formung von Abflußlöchern in der Kunststoffpalette in parzellenartigen Segmenten einen Verrippungsgitters vorgesehen sind.

## Claims

1. Method for the production of a one-piece, plastic, double-cross pallet with two decks, columns between the decks and passages between the columns, in particular a mirror-symmetrical pallet, using the injection moulding technique in an injection moulding die, such that double-cross passages are formed by means of slide plates of different lengths which meet each other at right angles and can be moved back and forth in the space between a gating half of the mould and an ejector half of the mould of the injection moulding die perpendicularly to the movement direction of the two mould halves,
**characterised in that**
a slide-plate configuration is used in which, in each case, a shorter slide plate is arranged next to a longer slide plate.

2. Method according to Claim 1,
**characterised in that**
a slide-plate configuration is used in which, in each case, slide plates next-but-one to one another are of equal length.

3. Injection moulding die (2) for a injection moulding machine to carry out the method according to Claim 1, with a fixed gating half (44) of the mould and a movable ejector half (45) of the mould, such that the ejector half (45) of the mould comprises a baseplate and an ejector element (47) and such that a configuration of slide plates is positioned on the gating half (44) or on the ejector half (45) of the mould, and in the said configuration in each case a shorter slide plate (51, 43, 55, 57) is next to a longer slide plate (50, 52, 54, 56).

4. Injection moulding die according to Claim 3,
**characterised in that**
each slide plate (50, 52, 54, 56) is always positioned at right-angles to a adjacent slide plate (51, 53, 55, 57).

5. Injection moulding die according to one or both of Claims 3 to 4,
**characterised in that**
the ejector half (45) of the mould comprises a rectangular baseplate (46) on which side ledges (48) are arranged on the gating half of the mould, the said ledges combining to form a flame and forming a trough-like inside space with a U-shaped cross-section, such that in each ledge (48) two slide plates of different length are inserted in corresponding through-holes a distance apart from one another, and the lengths of the slide plates (50-57) are matched to one another such that together they form a double-cross (49) in the inside space of the said flame.

6. Injection moulding die according to Claim 5,
**characterised in that**
the slide plates (50-57) are arranged so that they can move perpendicularly to the longitudinal extension of the respective ledges (48), such that in the inside space of the frame slide plates positioned opposite one another abut against a slide plate running transversely to them in the inside space of the frame.

7. Injection moulding die according to one or more of Claims 3 to 6,
**characterised in that**
in the baseplate (46) a lattice or undercut lattice (60) consisting of incisions or undercuts (58 and 59) is provided.

8. Injection moulding die according to Claim 7,
**characterised in that**
in the gating half (44) of the mould an incised lattice (64) is also provided.

9. Injection moulding die according to one or more of Claims 3 to 8,
**characterised in that**
the slide plates (50-57) are arranged so that they can be actuated by actuator elements, in particular hydraulically, pneumatically or electromagnetically controlled elements, preferably hydraulically driven movement cylinders, so that once the injected plastic has set they can be moved out of the inside space delimited by the side ledges (48).

10. Injection moulding die according to one or more of Claims 5 to 9,
**characterised in that**
the slide plates (50-57) that can be pushed into the openings in the side ledges (48) have rectangular cross-sections.

11. Injection moulding die according to Claim 10,
**characterised in that**
the slide plates (50-57) have the same rectangular profile.

12. Injection moulding die according to any of Claims 3 to 11,
**characterised in that**
in at least one of the two halves (44, 45) of the mould, pin bushes (66) holding spring-loaded pins (67) are formed, which are provided for the moulding of drain-holes in the plastic pallet in parcel-like segments of a lattice of ribs.

## Revendications

1. Procédé de fabrication d'une palette à double croix en matière plastique en une seule pièce, comprenant deux plateaux et des colonnes entre les plateaux ainsi que des passages entre les colonnes, en particulier une palette symétrique selon la technique du transfert, dans un outil de transfert, dans lequel des passages en double croix sont formés avec des coulisseaux de différentes longueurs, qui se rejoignent à angle droit et qui peuvent être avancés et reculés dans l'espace intermédiaire entre un demi-moule d'injection et un demi-moule d'éjection de l'outil de transfert, perpendiculairement à la direction du mouvement des deux demi-moules,
caractérisé en ce qu'on utilise une constellation de coulisseaux dans laquelle un coulisseau court est disposé adjacent à un coulisseau long.

2. Procédé selon la revendication 1,
caractérisé en ce qu'on utilise une constellation de coulisseaux dans laquelle les coulisseaux sont de même longueur en alternance, un sur deux.

3. Outil de transfert (2) pour une installation de technique de transfert pour la mise en oeuvre du procédé selon la revendication 1, comprenant un demi-moule d'injection fixe (44) et un demi-moule éjecteur mobile (45), le demi-moule éjecteur (45) présentant une plaque de base et un organe éjecteur (47) et dans lequel, au demi-moule d'injection (44) ou au demi-moule éjecteur (45), est associée une constellation de coulisseaux dans laquelle un coulisseau court (51, 53, 55, 57) est disposé adjacent à un coulisseau long (50, 52, 54, 56).

4. Outil de transfert selon la revendication 3,
caractérisé en ce qu'un coulisseau (50, 52, 54, 56) est disposé perpendiculairement à un coulisseau adjacent (51, 53, 55, 57).

5. Outil de transfert selon une ou plusieurs des revendications 3 à 4,
caractérisé en ce que le demi-moule éjecteur (45) présente une plaque de base rectangulaire (46) sur laquelle sont disposées, sur le côté du demi-moule d'injection, des barrettes latérales (48) qui se complètent pour former un cadre et forment un espace intérieur en forme de cuvette, en forme de U en section transversale, deux coulisseaux de différentes longueurs étant ajustés dans chaque barrette (48), dans des ouvertures traversantes correspondantes à un certain écartement l'un de l'autre ; les longueurs des coulisseaux (50-57) étant adaptées les unes aux autres de manière qu'ils forment entre eux une double croix (49) dans le volume intérieur du cadre.

6. Outil de transfert selon la revendication 5, caractérisé en ce que les coulisseaux (50-57) sont disposés de façon à pouvoir se déplacer perpendiculairement à l'étendue longitudinale de la barrette (48) correspondante, les coulisseaux disposés face à face dans l'espace intérieur du cadre butant contre un coulisseau qui s'étend transversalement dans l'espace intérieur du cadre.

7. Outil de transfert selon une ou plusieurs des revendications 3 à 6,
caractérisé en ce que, dans la plaque de base (46), est prévue une grille ou grille à contre-dépouille (60), composée d'entailles ou d'entailles à contre-dépouille (58 ou 59 respectivement).

8. Outil de transfert selon la revendication 7,
caractérisé en ce qu'une grille entaillée (64) est aussi prévue dans le demi-moule d'injection (44).

9. Outil de transfert selon une ou plusieurs des revendications 3 à 8,
caractérisé en ce que les coulisseaux (50-57) sont agencés de façon à pouvoir être actionnés au moyen d'organes d'actionnement, en particulier d'organes hydrauliques, pneumatiques ou à commande électromagnétique, de préférence au moyen de vérins à commande hydraulique, de sorte qu'après la solidification de la matière plastique injectée, ils puissent être extraits de l'espace intérieur limité par les barrettes latérales (48).

10. Outil de transfert selon une ou plusieurs des revendications 5 à 9,
caractérisé en ce que les coulisseaux (50-57) qui peuvent être emmanchés dans les ouvertures des barrettes latérales (48) présentent un profil de section rectangulaire.

11. Outil de transfert selon la revendication 10,
caractérisé en ce que les coulisseaux (50-57) présentent un profil rectangulaire identique.

12. Outil de transfert selon une ou plusieurs des revendications 3 à 11,
caractérisé en ce que, dans au moins un des deux demi-moules (44, 45), sont agencées des douilles à tiges (66), munies de tiges de moule (67) appuyées sur des ressorts, qui sont prévues pour former des trous de coulée dans la palette en matière plastique, dans les segments parcellaires d'une grille de nervurage.
